# EUROPEAN PATENT APPLICATION

(11) **EP 4 358 272 A1**
(43) Date of publication of application: **24.04.2024**
(21) Application number: 22917754.8
(22) Date of filing: 05.01.2022
(51) Int. Cl.: H01M 50/466

(54) **ELECTRODE ASSEMBLY AND PREPARATION METHOD THEREFOR, BATTERY CELL, BATTERY, AND ELECTRONIC DEVICE**

(71) Applicant: Contemporary Amperex Technology Co., Limited, Ningde, Fujian 352100 (CN)
(72) Inventor: PENG, Shuangjuan, Ningde, Fujian 352100 (CN); XIAO, Haihe, Ningde, Fujian 352100 (CN); ZHANG, Xiaowen, Ningde, Fujian 352100 (CN)
(74) Representative: Ran, Handong
(86) International application number: PCT/CN2022/070390
(87) International publication number: WO 2023/130278

(57) **Abstract**

The present application discloses an electrode assembly and a preparation method therefor, a battery cell, a battery, and an electronic device. The electrode assembly comprises a first electrode sheet, a separator, and a second electrode sheet. The first electrode sheet comprises a first electrode sheet main body and a first tab. The first electrode sheet main body comprises two first electrode sheet edges that are disposed opposite one another in a first direction and two second electrode sheet edges that are disposed opposite one another in a second direction. The first direction is perpendicular to the second direction. The first tab is located at one first electrode sheet edge. In the electrode assembly of embodiments of the present application, the separator between the first electrode sheet and the second electrode sheet forms a multi-layer separator structure. Projection in a third direction causes the multi-layer separator structure to overlap with the first electrode sheet edge and/or the second electrode sheet edge. The third direction is perpendicular to the first direction and the second direction, thereby alleviating the problem of short circuiting caused by expansion of the electrode sheet when the battery is in use.

## Description

### Technical Field

The present application relates to the field of batteries, and in particular, to an electrode assembly and a preparation method therefor, a battery cell, a battery, and a power consuming apparatus.

### Background Art

During charging and discharging of a battery, an electrode plate may expand, resulting in a short circuit of the battery, which may affect the safety performance and the service life of the battery.

### Summary of the Invention

In view of the above problems, the present application provides an electrode assembly and a preparation method therefor, a battery cell, a battery, and a power consuming apparatus, which can alleviate the problem of short circuit of a battery caused by expansion of an electrode plate during use of the battery.

In a first aspect, the present application provides an electrode assembly, comprising a first electrode plate, a separator, and a second electrode plate, wherein the first electrode plate comprises a first electrode plate body and a first tab; the first electrode plate body comprises two first electrode plate edges arranged opposite to each other in a first direction, and two second electrode plate edges arranged opposite to each other in a second direction; the first direction is perpendicular to the second direction; and the first tab is located at one of the first electrode plate edges, wherein the separator comprises a first multilayer separator structure arranged between at least one of the two first electrode plate edges and the second electrode plate; and in terms of projection in a third direction, the first electrode plate edge overlaps the first multilayer separator structure; and/or the separator comprises two second multilayer separator structures arranged between the two second electrode plate edges and the second electrode plate; in terms of projection in the third direction, each of the second electrode plate edges overlaps one of the second multilayer separator structures; and the third direction is perpendicular to the first direction and the second direction.

In the technical solution of the embodiment of the present application, the electrode assembly forms a multilayer separator structure by the separator between the first electrode plate and the second electrode plate; in addition, in terms of projection in the third direction, the multilayer separator structure overlaps the first electrode plate edges and/or the second electrode plate edges. In such a design, the multilayer separator structure has good puncture resistance. When the electrode plate expands during use of the battery, each first electrode plate edge and/or each second electrode plate edge of the first electrode plate come(s) into contact with the corresponding multilayer separator structure, the multilayer separator structure can reduce the risk of small burrs and the like puncturing the separator, so that the problem of short circuit of the battery caused by expansion of the electrode plate can be alleviated during use of the battery.

In some embodiments, according to the first aspect, a first example of the first aspect is provided, in which the separator comprises a first multilayer separator structure arranged between at least one of the two first electrode plate edges and the second electrode plate; the separator comprises a first separator with a separator body arranged between the first electrode plate and the second electrode plate, and a second separator with a separator body arranged on the side of the first electrode plate away from the first separator; the first separator and the second separator are arranged parallel to the first electrode plate; the first separator comprises two first separator edges arranged opposite to each other in the first direction; wherein a first flanging structure is formed at at least one of the first separator edges, and the first flanging structure comprises at least two layers of first separators; in terms of projection in the third direction, the first electrode plate edge overlaps the first flanging structure; the first flanging structure wraps around the first electrode plate edge adjacent thereto; the second separator comprises two second separator edges arranged opposite to each other in the first direction; a second flanging structure is formed at one of the second separator edges close to the first flanging structure, and the second flanging structure wraps around the first electrode plate edge adjacent thereto; and the separator body of the first separator and the second flanging structure form the first multilayer separator structure. In this design, the first separator and the second separator respectively wrap around the first electrode plate edge on two sides of the first electrode plate by flanging, so that anti-puncture protection structures are distributed on two sides of the first electrode plate edge. The multilayer separator structure is formed by a separator body and a flanging structure, which can be completed by performing a flanging operation at the separator edge during preparation, so that the operation is simple. The flanging structure wrapping around the adjacent electrode plate edge makes it easier to control the accuracy of a flanging width.

In some embodiments, according to the first aspect, a second example of the first aspect is provided, in which the separator comprises a first multilayer separator structure arranged between at least one of the two first electrode plate edges and the second electrode plate; the separator comprises a first separator arranged between the first electrode plate and the second electrode plate, and a second separator with a separator body arranged on the side of the first electrode plate away from the first separator; the first separator and the second separator are arranged parallel to the first electrode plate; the second separator comprises two second separator edges arranged opposite to each other in the first direction; wherein a second flanging structure is formed at at least one of the second separator edges, and the second flanging structure comprises at least two layers of second separators; in terms of projection in the third direction, the first electrode plate edge overlaps the second flanging structure and the first separator; the second flanging structure wraps around the first electrode plate edge adjacent thereto; and the second flanging structure and a separator body of the first separator form the first multilayer separator structure. In this design, the second separator wraps around the first electrode plate edge on the side of the first electrode plate away from the second electrode plate by flanging, so that an anti-puncture protection structure is distributed on the side of the first electrode plate edge close to the second electrode plate. The multilayer separator structure is formed by a separator body and a flanging structure, which can be completed by performing a flanging operation at the separator edge during preparation, so that the operation is simple. The flanging structure wrapping around the adjacent electrode plate edge makes it easier to control the accuracy of a flanging width.

In some embodiments, according to the first aspect, a third example of the first aspect is provided, in which the separator comprises a first multilayer separator structure arranged between at least one of the two first electrode plate edges and the second electrode plate; the separator comprises a first separator arranged between the first electrode plate and the second electrode plate; the first separator is arranged parallel to the first electrode plate; the first separator comprises two first separator edges arranged opposite to each other in the first direction; wherein a first flanging structure is formed at at least one of the first separator edges, and the first flanging structure comprises at least two layers of first separators; in terms of projection in the third direction, the first electrode plate edge overlaps the first flanging structure; and the first flanging structure and a separator body of the first separator form the first multilayer separator structure. In this design, the first separator is flanged at the first separator edge, so that an anti-puncture protection structure is distributed on the side of the first electrode plate edge close to the second electrode plate. The multilayer separator structure is formed by a separator body and a flanging structure, which can be completed by performing a flanging operation at the separator edge during preparation, so that the operation is simple, and the fixing of the flanging structure is facilitated.

In some embodiments, according to the first example of the first aspect, a fourth example of the first aspect is provided, in which in terms of projection in the third direction, an overlapping area between the first flanging structure and the first electrode plate body and an overlapping area between the second flanging structure and the first electrode plate body at least partially overlap. In this design, the overlapping area between the first flanging structure and the first electrode plate body and the overlapping area between the second flanging structure and the first electrode plate body can respectively provide an anti-puncture function on two sides of the first electrode plate. When the overlapping area between the first flanging structure and the first electrode plate body and the overlapping area between the second flanging structure and the first electrode plate body partially overlap, edges of the first flanging structure and the second flanging structure are distributed in a staggered manner in the first direction, so that a total thickness of the first electrode plate and the flanging structures on the two sides changes stepwise in the first direction, and a pressure action of a terrace formed by the edges of the first flanging structure and the second flanging structure on the first electrode plate can be weakened during expansion, squeezing, etc.

In some embodiments, according to the first aspect and any one of the first to fourth examples of the first aspect, a fifth example of the first aspect is provided, in which in the first direction, the first electrode plate has a dimension of L1, and the first multilayer separator structure has a dimension of L2, where L2/L1 ≤ 1/10. In this design, an overlap width between the first multilayer separator structure and the first electrode plate body is controlled within a certain standard in the first direction, thereby effectively maintaining the capacity of the electrode assembly.

In some embodiments, according to the first aspect and any one of the first to fifth examples of the first aspect, a sixth example of the first aspect is provided, in which the electrode assembly is of a wound structure. In this design, especially when the first multilayer separator structure is provided, since the first electrode plate edge in the wound structure generally has a relatively large length, the first multilayer separator structure can effectively alleviate the problem of short circuit of the battery caused by the separator being punctured, and the arrangement of the first multilayer separator structure is further facilitated.

In some embodiments, according to the first aspect, a seventh example of the first aspect is provided, in which the separator comprises two second multilayer separator structures arranged between the two second electrode plate edges and the second electrode plate; the separator comprises a first separator with a separator body arranged between the first electrode plate and the second electrode plate, and a second separator with a separator body arranged on the side of the first electrode plate away from the first separator; the first separator and the second separator are arranged parallel to the first electrode plate; the first separator comprises two third separator edges arranged opposite to each other in the second direction; wherein third flanging structures are formed at the two third separator edges, and each of the third flanging structures comprises at least two layers of first separators; in terms of projection in the third direction, the second electrode plate edge overlaps the third flanging structure; the third flanging structure wraps around the second electrode plate edge adjacent thereto; the second separator comprises two fourth separator edges arranged opposite to each other in the second direction; a fourth flanging structure is formed at one of the fourth separator edges close to the third flanging structure, and the fourth flanging structure wraps around the second electrode plate edge adjacent thereto; and the separator body of the first separator and the fourth flanging structure form the second multilayer separator structure. In this design, the first separator and the second separator respectively wrap around the second electrode plate edge on two sides of the first electrode plate by flanging, so that anti-puncture protection structures are distributed on two sides of the second electrode plate edge. The multilayer separator structure is formed by a separator body and a flanging structure, which can be completed by performing a flanging operation at the separator edge during preparation, so that the operation is simple. The flanging structure wrapping around the adjacent electrode plate edge makes it easier to control the accuracy of a flanging width.

In some embodiments, according to the first aspect, an eighth example of the first aspect is provided, in which the separator comprises two second multilayer separator structures arranged between the two second electrode plate edges and the second electrode plate; the separator comprises a first separator arranged between the first electrode plate and the second electrode plate, and a second separator with a separator body arranged on the side of the first electrode plate away from the first separator; the first separator and the second separator are arranged parallel to the first electrode plate; the second separator comprises two fourth separator edges arranged opposite to each other in the second direction; wherein fourth flanging structures are formed at the two fourth separator edges, and each of the fourth flanging structures comprises at least two layers of second separators; in terms of projection in the third direction, the second electrode plate edge overlaps the fourth flanging structure and the first separator; the fourth flanging structure wraps around the second electrode plate edge adjacent thereto; and the fourth flanging structure and a separator body of the first separator form the second multilayer separator structure. In this design, the second separator wraps around the second electrode plate edge on the side of the first electrode plate away from the second electrode plate by flanging, so that an anti-puncture protection structure is distributed on the side of the second electrode plate edge close to the second electrode plate. The multilayer separator structure is formed by a separator body and a flanging structure, which can be completed by performing a flanging operation at the separator edge during preparation, so that the operation is simple. The flanging structure wrapping around the adjacent electrode plate edge makes it easier to control the accuracy of a flanging width.

In some embodiments, according to the first aspect, a ninth example of the first aspect is provided, in which the separator comprises two second multilayer separator structures arranged between the two second electrode plate edges and the second electrode plate; the separator comprises a first separator arranged between the first electrode plate and the second electrode plate; the first separator is arranged parallel to the first electrode plate; the separator comprises two third separator edges arranged opposite to each other in the second direction; wherein third flanging structures are formed at the two third separator edges, and each of the third flanging structures comprises at least two layers of first separators; in terms of projection in the third direction, the second electrode plate edge overlaps the third flanging structure; and the third flanging structure and a separator body of the first separator form the second multilayer separator structure. In this design, the first separator is flanged at the third separator edge, so that an anti-puncture protection structure is distributed on the side of the second electrode plate edge close to the second electrode plate. The multilayer separator structure is formed by a separator body and a flanging structure, which can be completed by performing a flanging operation at the separator edge during preparation, so that the operation is simple, and the fixing of the flanging structure is facilitated.

In some embodiments, according to the seventh example of the first aspect, a tenth example of the first aspect is provided, in which in terms of projection in the third direction, an overlapping area between the third flanging structure and the first electrode plate body and an overlapping area between the fourth flanging structure and the first electrode plate body at least partially overlap. In this design, the overlapping area between the third flanging structure and the first electrode plate body and the overlapping area between the fourth flanging structure and the first electrode plate body can respectively provide an anti-puncture function on two sides of the first electrode plate. When the overlapping area between the third flanging structure and the first electrode plate body and the overlapping area between the fourth flanging structure and the first electrode plate body partially overlap, edges of the third flanging structure and the fourth flanging structure are distributed in a staggered manner in the second direction, so that a total thickness of the first electrode plate and the flanging structures on the two sides changes stepwise in the second direction, and a pressure action of a terrace formed by the edges of the third flanging structure and the fourth flanging structure on the first electrode plate can be weakened during expansion, squeezing, etc.

In some embodiments, according to the first aspect and any one of the seventh to tenth examples of the first aspect, an eleventh example of the first aspect is provided, in which in the second direction, the first electrode plate has a dimension of L3, and the second multilayer separator structure has a dimension of L4, where L4/L3 ≤ 1/10. In this design, an overlap width between the second multilayer separator structure and the first electrode plate body is controlled within a certain standard in the second direction, thereby effectively maintaining the capacity of the electrode assembly.

In some embodiments, according to the first aspect and any one of the seventh to eleventh examples of the first aspect, a twelfth example of the first aspect is provided, in which the electrode assembly is of a laminated structure. In this design, especially when the second multilayer separator structure is provided, the second multilayer separator structure can effectively alleviate the problem of short circuit of the battery caused by the separator being punctured, and the arrangement of the second multilayer separator structure is further facilitated.

In some embodiments, according to either of the second and eighth examples of the first aspect, a thirteenth example of the first aspect is provided, in which in the third direction, the separator body of the first separator has a dimension less than that of the separator body of the second separator. In this design, in the third direction, the separator body of the first separator has a relatively small dimension, and between the first electrode plate and the second electrode plate, the separator body of the first separator effectively alleviates the problem of the separator being punctured by fitting with the flanging structure; and the separator body of the second separator has a relatively large dimension, and on the side of the first electrode plate away from the second electrode plate, the separator body itself of the second separator can alleviate to some extent the problem of the separator being punctured.

In a second aspect, the present application provides a battery cell, comprising a shell and an electrode assembly in the above embodiments, wherein the electrode assembly is received in the shell.

In a third aspect, the present application provides a battery, comprising a case and a battery cell in the above embodiment, wherein the battery cell is received in the case.

In a fourth aspect, the present application provides a power consuming apparatus, comprising a battery in the above embodiment.

In a fifth aspect, the present application provides a method for preparing an electrode assembly, the method comprising: preparing a first electrode plate, a separator, and a second electrode plate, wherein the first electrode plate comprises a first electrode plate body and a first tab; the first electrode plate body comprises two first electrode plate edges arranged opposite to each other in a first direction, and two second electrode plate edges arranged opposite to each other in a second direction; the first direction is perpendicular to the second direction; and the first tab is located at one of the first electrode plate edges, wherein the separator is configured to comprise a first multilayer separator structure arranged between at least one of the two first electrode plate edges and the second electrode plate; and in terms of projection in a third direction, the first electrode plate edge overlaps the first multilayer separator structure; and/or the separator is configured to comprise two second multilayer separator structures arranged between the two second electrode plate edges and the second electrode plate; in terms of projection in the third direction, each of the second electrode plate edges overlaps one of the second multilayer separator structures; and the third direction is perpendicular to the first direction and the second direction.

In the technical solution of the embodiment of the present application, the electrode assembly in the above embodiments can be prepared, so that the problem of short circuit of the battery caused by expansion of an electrode plate can be alleviated during use of the battery.

In some embodiments, according to the fifth aspect, a first example of the fifth aspect is provided, in which the step in which the separator is configured to comprise a first multilayer separator structure arranged between at least one of the two first electrode plate edges and the second electrode plate comprises: flanging and folding at least one edge of the separator close to the first electrode plate edge; and the step in which the separator is configured to comprise two second multilayer separator structures arranged between the two second electrode plate edges and the second electrode plate comprises: flanging and folding two edges of the separator close to the second electrode plate edge. In this design, a flanging structure is prepared by performing a flanging operation at the separator edge, and a multilayer separator structure is formed by fitting the flanging structure with a separator body, so that the operation is simple.

In some embodiments, according to the first example of the fifth aspect, a second example of the fifth aspect is provided, in which the flanging and folding operation is performed by means of a manipulator or by means of wind power. In this design, when the flanging and folding operation is performed by means of a manipulator, the operation is flexible and efficient; and when the flanging and folding operation is performed by means of wind power, a contactless operation can be implemented, thereby avoiding damage to the separator, the electrode plates, etc. caused by a contact operation, and avoiding the introduction of foreign matter caused by the contact operation.

In some embodiments, according to either of the first and second examples of the fifth aspect, a third example of the fifth aspect is provided, in which the electrode assembly is of a laminated structure, and the preparation method further comprises bonding an area subjected to the flanging and folding by hot pressing; or the electrode assembly is of a wound structure, and the preparation method further comprises bonding an area subjected to the flanging and folding by means of a bonding material. In this design, the flanging structure is bonded and fixed, facilitating subsequent operations such as lamination, winding and overlaying during production of the electrode assembly, and ensuring that the flanging structure can better fit with the separator body to provide an anti-puncture function. In the case of the laminated structure, hot pressing treatment is facilitated, and the hot pressing bonding is well matched with a process for producing the electrode assembly. In the case of the wound structure, the bonding material may be applied for bonding before or during winding, which is well matched with the process for producing the electrode assembly.

The above description is only an overview of the technical solutions of the present application. In order to more clearly understand the technical means of the present application to implement the technical means according to the contents of the description, and in order to make the above and other objectives, features and advantages of the present application more obvious and understandable, specific implementations of the present application are exemplarily described below.

### Brief Description of the Drawings

Various other advantages and benefits will become apparent to those of ordinary skill in the art upon reading the following detailed description of preferred implementations. Accompanying drawings are merely for the purpose of illustrating the preferred implementations and are not to be construed as limiting the present application. Moreover, like components are denoted by like reference numerals throughout the accompanying drawings. In the drawings:
FIG. 1 is a schematic structural diagram of a vehicle according to some embodiments of the present application;
FIG. 2 is an exploded view of a battery according to some embodiments of the present application;
FIG. 3 is an exploded view of a battery cell shown in FIG. 2;
FIG. 4 is a schematic structural diagram of an electrode assembly according to some embodiments of the present application;
FIG. 5 is a sectional view of the electrode assembly of FIG. 4 taken along an E-E projection direction;
FIG. 6 is a partial enlarged view of part VI of FIG. 5;
FIG. 7 is a schematic structural diagram of an electrode assembly according to some embodiments of the present application;
FIG. 8 is a sectional view of the electrode assembly of FIG. 7 taken along an F-F projection direction;
FIG. 9 is a partial enlarged view of part IX of FIG. 8;
FIG. 10 is a first design diagram of a first multilayer separator structure according to some embodiments of the present application;
FIG. 11 is a second design diagram of a first multilayer separator structure according to some embodiments of the present application;
FIG. 12 is a third design diagram of a first multilayer separator structure according to some embodiments of the present application;
FIG. 13 is a fourth design diagram of a first multilayer separator structure according to some embodiments of the present application;
FIG. 14 is a first design diagram of a second multilayer separator structure according to some embodiments of the present application;
FIG. 15 is a second design diagram of a second multilayer separator structure according to some embodiments of the present application;
FIG. 16 is a third design diagram of a second multilayer separator structure according to some embodiments of the present application; and
FIG. 17 is a fourth design diagram of a second multilayer separator structure according to some embodiments of the present application.

Reference Signs in Detailed Description of Embodiments:
Vehicle 1000;
Battery 100, controller 200, motor 300;
Case 10, first portion 11, second portion 12, receiving space 13;
Battery cell 20, shell 21, electrode assembly 22, electrode terminal 23, pressure relief structure 24;
Housing 211, cap 212, sealed space 213, first electrode plate 221, second electrode plate 222, separator 223;
First electrode plate body 2211, first electrode plate edge 2211a, second electrode plate edge 2211b, first tab 2212;
Second electrode plate body 2221, third electrode plate edge 2221a, fourth electrode plate edge 2221b, second tab 2222;
First multilayer separator structure 2231, second multilayer separator structure 2232, first separator 2233, first separator edge 2233a, first flanging structure 2233b, third separator edge 2233c, third flanging structure 2233d, second separator 2234, second separator edge 2234a, second flanging structure 2234b, fourth separator edge 2234c, fourth flanging structure 2234d;
First direction A, second direction B, third direction C.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the orientation or positional relationship indicated by the technical terms such as "longitudinal", "transverse", "length", "height", "thickness", "upper", "lower", "front", "rear", "left", "right", "vertical", "horizontal", "top", "bottom", "inner" and "outer", is based on the orientation or positional relationship shown in the accompanying drawings, and is merely for ease of describing the embodiments of the present application and simplifying the description, rather than indicating or implying that the device or element referred to must have a particular orientation and be constructed and operated in a particular orientation. Therefore, this should not be construed as limiting embodiments of the present application.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated device are merely illustrative and should not be construed to limit the present application in any way.

In the present application, a battery cell may include a lithium ion secondary battery, a lithium ion primary battery, a lithium-sulfur battery, a sodium-lithium ion battery, a sodium ion battery, a magnesium ion battery 100, etc., which will not be limited in the embodiments of the present application. The battery cell may be cylindrical, flat, cuboid or in another shape, which will also not be limited in the embodiments of the present application. The battery cells are generally classified into three types depending on the way of package: cylindrical battery cells, prismatic battery cells and pouch battery cells, which also will not be limited in the embodiments of the present application.

The battery cell comprises an electrode assembly and an electrolyte solution. The electrode assembly is composed of a positive electrode plate, a negative electrode plate, and a separator. The operation of the battery cell mainly relies on the movement of metal ions between the positive electrode plate and the negative electrode plate. The positive electrode plate comprises a positive electrode current collector and a positive electrode active material layer. A surface of the positive electrode current collector is coated with the positive electrode active material layer, the positive electrode current collector that is not coated with the positive electrode active material layer protrudes from the positive electrode current collector coated with the positive electrode active material layer, and the positive electrode current collector that is not coated with the positive electrode active material layer is used as a positive electrode tab. Taking a lithium ion battery as an example, the positive electrode current collector may be made of an aluminum, and the positive electrode active material may be lithium cobalt oxide, lithium iron phosphate, ternary lithium, lithium manganate, etc. The negative electrode plate comprises a negative electrode current collector and a negative electrode active material layer. A surface of the negative electrode current collector is coated with the negative electrode active material layer, the negative electrode current collector that is not coated with the negative electrode active material layer protrudes from the negative electrode current collector coated with the negative electrode active material layer, and the negative electrode current collector that is not coated with the negative electrode active material layer is used as a negative electrode tab. The negative electrode current collector may be made of copper, and the negative electrode active material may be carbon, silicon, etc. In order to ensure that no fusing occurs when a large current passes, there are a plurality of positive electrode tabs are provided and are stacked together, and a plurality of negative electrode tabs are provided and are stacked together. The separator may be made of polypropylene (PP), polyethylene (PE), etc. In addition, the electrode assembly may be of a wound structure or a laminated structure, which will not be limited in the embodiments of the present application.

A battery in the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matter from affecting charging or discharging of the battery cell(s).

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

The inventor has noticed that during charging and discharging of a battery, an electrode plate may expand, thereby squeezing an adjacent separator. In an electrode assembly, a positive electrode plate and a negative electrode plate are generally designed in the form of a big one and a small one, and there are edge burrs during cutting of each electrode plate, there are also a certain amount of dressings exfoliated from an electrode plate edge, and there may also be a certain amount of foreign matter introduced from an external environment into the electrode assembly. The above materials such as the burrs are generally located near the electrode plate edge, and when the electrode plate expands, squeezing the separator adjacent to the separator, the above materials such as the burrs are likely to puncture the separator, which may lead to the problem of short circuit of the battery.

In order to solve the above problems, the inventor has found through research that the problem of materials such as burrs puncturing a separator can be solved by performing adhesive application and edge wrapping on an edge of an electrode plate. However, an adhesive coating process requires high accuracy for an apparatus. Too wide adhesive coating may lead to low capacity of the electrode assembly, and too narrow adhesive coating cannot solve the problem of materials such as burrs puncturing the separator. Moreover, the adhesive coating process requires the introduction of adhesive substances. After the adhesive coating fails, an act of removing the adhesive may cause damage to the electrode plate. Therefore, after the adhesive coating fails, secondary remediation cannot be performed, which may cause some irreversible losses to the production efficiency of the electrode assembly.

Based on the above considerations, the inventor has designed an electrode assembly after in-depth research. A multilayer separator structure overlapping an edge of an electrode plate is arranged on the separator, and the multilayer separator structure is in contact with the edge of the electrode plate, thereby effectively alleviating the problem of short circuit of a battery caused by materials such as burrs puncturing the separator. Moreover, the arrangement of the multilayer separator structure can effectively overcome the above problems existing in the adhesive coating process.

The technical solution described in the embodiments of the present application is applicable to an electrode assembly, a battery cell using the electrode assembly 22, a battery using the battery cell, and a power consuming apparatus using the battery.

In the present application, the power consuming apparatus may be in various forms, such as a mobile phone, a portable apparatus, a laptop, an electric motorcycle, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer.

For ease of description of the embodiments below, an example in which a power consuming apparatus in an embodiment of the present application refers to a vehicle 1000 is used for description.

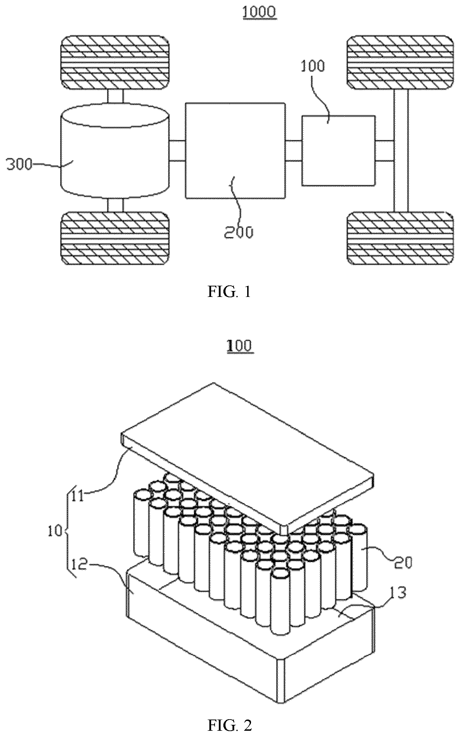

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, an extended-range vehicle, etc. A battery 100 is provided inside the vehicle 1000, and the battery 100 may be provided at the bottom, the front or the back of the vehicle 1000. The battery 100 may be configured to supply power to the vehicle 1000. For example, the battery 100 may be used as a power supply for operating the vehicle 1000. The vehicle 1000 may further comprise a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, in place of or partially in place of fuel or natural gas, to provide driving power for the vehicle 1000.

Referring to FIG. 2, FIG. 2 is an exploded view of a battery 100 according to some embodiments of the present application. The battery 100 may comprise a case 10 and battery cells 20, the battery cells 20 being received in the case 10. The case 10 is configured to receive the battery cells 20, and the case 10 may be of various structures. In some embodiments, the case 10 may comprise a first portion 11 and a second portion 12. The first portion 11 and the second portion 12 are fitted to each other in a covered manner. The first portion 11 and the second portion 12 together define a receiving space 13 for receiving the battery cells 20. The second portion 12 may be of a hollow structure with one end open, the first portion 11 is of a plate-like structure, and the first portion 11 covers the open side of the second portion 12 to form a case 10 having a receiving space 13. The first portion 11 and the second portion 12 may also be of a hollow structure with one side open, and the open side of the first portion 11 covers the open side of the second portion 12, to form a case 10 having a receiving space 13. Of course, the first portion 11 and the second portion 12 may be in various shapes, such as a cylinder and a cuboid.

In the battery 100, one or more battery cells 20 may be provided. If a plurality of battery cells 20 are provided, the plurality of battery cells 20 may be connected in series, in parallel, or in series-parallel. The series-parallel connection means that some of the plurality of battery cells 20 are connected in series and the rest are connected in parallel. The plurality of battery cells 20 may be directly connected to each other in series or in parallel or in series-parallel, and then a whole composed of the plurality of battery cells 20 is received in the case 10. It is also possible that a plurality of battery cells 20 are first connected in series or in parallel or in series-parallel to form a battery 100 module, and a plurality of battery 100 modules are then connected in series or in parallel or in series-parallel to form one piece and are received in the case 10. The battery 100 may further comprise another structure. For example, the plurality of battery cells 20 may be electrically connected to each other by means of a busbar component, so as to implement series connection, parallel connection, or series-parallel connection of the plurality of battery cells 20.

Each battery cell 20 may be a secondary battery 100 or a primary battery 100; or may be a lithium-sulfur battery 100, a sodium ion battery 100, or a magnesium ion battery 100, but is not limited thereto. The battery cell 20 may be in the shape of a cylinder, a flat body, a cuboid, etc.

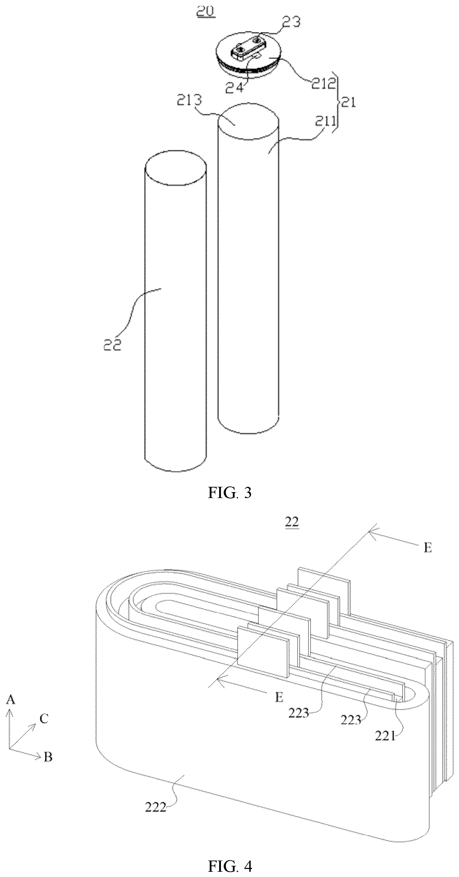

Referring to FIG. 3, FIG. 3 is an exploded view of the battery cell 20 shown in FIG. 2. The battery cell 20 refers to the smallest unit of the battery 100. As shown in FIG. 3, the battery cell 20 may comprise a shell 21 and an electrode assembly 22. The electrode assembly 22 is received in the shell 21. In some embodiments, the shell 21 may also be used for receiving an electrolyte, such as an electrolyte solution. The shell 21 may be of various structures.

The shell 21 may comprise a housing 211 and a cap 212.

The housing 211 is an assembly that is used to fit with the cap 212 to form an internal sealed space 213 for the battery cell 20. The formed sealed space 213 may be used for receiving the electrode assembly 22, the electrolyte solution and other components. The housing 211 and the cap 212 may be separate components, and the housing 211 may be provided with an opening, at which the cap 212 covers the opening to form an internal environment for the battery cell 20. Without limitation, the cap 212 and the housing 211 may also be integrated. Specifically, the cap 212 and the housing 211 can first form a common connection surface before other components are placed into the housing, and then the cap 212 covers the housing 211 when the interior of the housing 211 needs to be packaged. The housing 211 may have various shapes and various sizes, for example, in the form of a cuboid, a cylinder, a hexagonal prism, etc. Specifically, the shape of the housing 211 may be determined depending on the specific shape and size of the electrode assembly 22. The housing 211 may be made of various materials, such as copper, iron, aluminum, stainless steel, an aluminum alloy, plastic, etc., which is not particularly limited in the embodiments of the present application.

The cap 212 refers to a component that covers the opening of the housing 211 to isolate the internal environment from an external environment for the battery cell 20. Without limitation, the cap 212 may have a shape adapted to that of the housing 211 to fit with the housing 211. Optionally, the cap 212 may be made of a material (e.g., an aluminum alloy) with certain hardness and strength, and thus the cap 212 would not easily deform when subjected to squeezing or collision, so that the battery cell 20 can have a higher structural strength, and the safety performance can also be improved. The cap 212 may also be made of various materials, such as copper, iron, aluminum, stainless steel, an aluminum alloy, plastic, etc., which will not be particularly limited in the embodiments of the present application. In some embodiments, an insulating member may be further provided on an inner side of the cap 212. The insulating member may be used to isolate electrical connection components within the housing 211 from the cap 212, so as to reduce the risk of short circuit. Illustratively, the insulating member may be made of plastic, rubber, etc.

Functional components, such as an electrode terminal 23, may be provided on the cap 212. The electrode terminal 23 is mounted on the cap 212. The electrode terminal 23 is electrically connected to the electrode assembly 22, so as to output electric energy generated by the battery cell 20. Illustratively, the electrode terminal 23 may be electrically connected to the electrode assembly 22 by means of an adapter sheet (not shown).

The battery cell 20 may further comprise a pressure relief structure 24. The pressure relief mechanism 24 is configured to release a pressure from the battery cell 20 when an internal pressure or temperature of the battery cell 20 reaches a predetermined value. Illustratively, the pressure relief mechanism 24 may be a component such as an explosion-proof valve, an explosion-proof plate, an air valve, a pressure relief valve, or a safety valve.

When the battery cell 20 is being assembled, the electrode assembly 22 may be first placed into the housing 211, the housing 211 is filled with an electrolyte, and then the cap 212 covers the opening of the housing 211.

The electrode assembly 22 is a component where an electrochemical reaction occurs in the battery cell 20. The housing 211 may include one or more electrode assemblies 22 therein. The electrode assembly 22 is mainly formed by winding or stacking a positive electrode plate and a negative electrode plate, with a separator arranged between the positive electrode plate and the negative electrode plate.

A specific structure of the electrode assembly 22 will be described in detail below with reference to accompanying drawings.

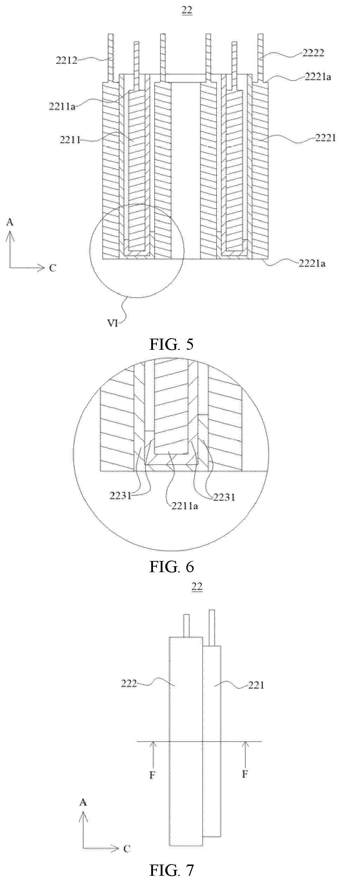

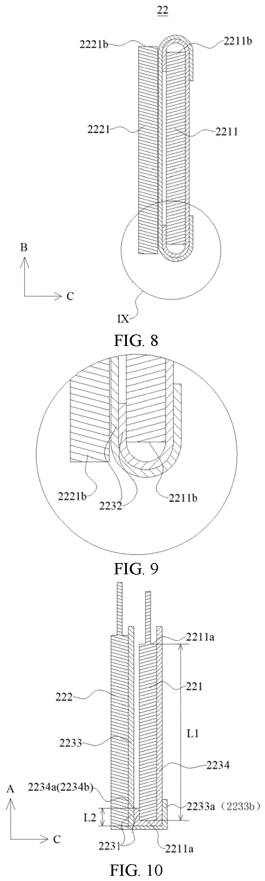

According to some embodiments of the present application, referring to FIGS. 4 to 9, FIGS. 4 and 7 are schematic structural diagrams of two electrode assemblies 22 according to embodiments of the present application, FIGS. 5 and 6 are respectively a sectional view of the electrode assembly 22 of FIG. 4 taken along an E-E projection direction and a partial enlarged view of the sectional view, and FIGS. 8 and 9 are respectively a sectional view of the electrode assembly 22 of FIG. 7 taken along an F-F projection direction and a partial enlarged view of the sectional view. The present application provides an electrode assembly 22, comprising a first electrode plate 221, a separator 223, and a second electrode plate 222.

The first electrode plate 221 comprises a first electrode plate body 2211 and a first tab 2212. As shown in FIG. 5, the first electrode plate body 2211 comprises two first electrode plate edges 2211a arranged opposite to each other in a first direction A. As shown in FIG. 8, the first electrode plate body 2211 comprises two second electrode plate edges 2211b arranged opposite to each other in a second direction B. The first tab 2212 is located at one of the first electrode plate edges 2211a. The second electrode plate 222 comprises a second electrode plate body 2221 and a second tab 2222. As shown in FIG. 5, the second electrode plate body 2221 comprises two third electrode plate edges 2221a arranged opposite to each other in the first direction A. As shown in FIG. 8, the second electrode plate body 2221 comprises two fourth electrode plate edges 2221b arranged opposite to each other in the second direction B.

Referring to FIGS. 4 to 6, the separator 223 comprises a first multilayer separator structure 2231 arranged between at least one of the two first electrode plate edges 2211a and the second electrode plate 222; and in terms of projection in a third direction C, the first electrode plate edge 2211a overlaps the first multilayer separator structure 2231; and/or referring to FIGS. 7 to 9, the separator 223 comprises two second multilayer separator structures 2232 arranged between the two second electrode plate edges 2211b and the second electrode plate 222; and in terms of projection in the third direction C, each of the second electrode plate edges 2211b overlaps one of the second multilayer separator structures 2232.

The first direction A is perpendicular to the second direction B, and the third direction C is perpendicular to the first direction A and the second direction B.

The first multilayer separator structure 2231 is located between the first electrode plate edge 2211a and the second electrode plate 222. That is to say, in terms of projection in the third direction C, the first electrode plate edge 2211a overlaps the second electrode plate 222, and the first electrode plate edge 2211a does not extend beyond the first electrode plate edge 2221a. Similarly, the second multilayer separator structure 2232 is located between the second electrode plate edge 2211b and the second electrode plate 222. That is to say, in terms of projection in the third direction C, the second electrode plate edge 2211b overlaps the second electrode plate 222, and the second electrode plate edge 2211b does not extend beyond the fourth electrode plate edge 2221b.

As an example, the electrode assembly 22 is of a structure in which an anode extends beyond a cathode, that is, in the electrode assembly 22, a negative electrode plate extends beyond a positive electrode plate, the first electrode plate 221 is the positive electrode plate, and the second electrode plate 222 is the negative electrode plate.

The first multilayer separator structure 2231 and the second multilayer separator structure 2232 each refer to a structure having at least two layers of films in the third direction C. In the separator, the distribution range of each multilayer separator structure is not limited, and the multilayer separator structure may be distributed only at an edge of the separator 223 or may extend to a position close to a middle portion of the separator 223. All layer structures in the multilayer separator structure may come from the same separator 223, or may come from different separators 223, for example, respectively from separators 223 on two sides of the first electrode plate 221.

By the separator 223 comprising a first multilayer separator structure 2231 and/or a second multilayer separator structure 2232, it is meant that in the electrode assembly 22, at least part of the separator 223 is provided with the multilayer separator structure, and there may be a separator 223 without the multilayer separator structure. The first multilayer separator structure 2231 and the second multilayer separator structure 2232 may be both provided, or only the first multilayer separator structure 2231 or only the second multilayer separator structure 2232 may be provided.

In an embodiment in which the first multilayer separator structure 2231 is provided, the first multilayer separator structures 2231 may be provided between the two first electrode plate edges 2211a and the second electrode plate 222, or the first multilayer separator structure 2231 may be provided only between any one of the first electrode plate edges 2211a and the second electrode plate 222.

When all layer structures in the first multilayer separator structure 2231 come from separators 223 on two sides of the first electrode plate 221, some layer structures in the first multilayer separator structure 2231 need to bypass the first electrode plate 221. Therefore, it is not convenient to arrange the first multilayer separator structure 2231 between the first electrode plate edge 2211a provided with the first tab 2212 and the second electrode plate 222.

Based on the above considerations, optionally, in an embodiment in which the first multilayer separator structure 2231 is provided, when all layer structures in the first multilayer separator structure 2231 come from the separators 223 on two sides of the first electrode plate 221, the first multilayer separator structure 2231 is provided only between the first electrode plate edge 2211a provided with no first tab 2212 and the second electrode plate 222.

In the technical solution of the embodiment of the present application, the electrode assembly 22 forms a multilayer separator structure on the separator 223 between the first electrode plate 221 and the second electrode plate 222; in addition, in terms of projection in the third direction C, the multilayer separator structure overlaps the first electrode plate edges 2211a and/or the second electrode plate edges 2211b. When the electrode plate expands during use of the battery 100, each first electrode plate edge 2211a and/or each second electrode plate edge 2211b of the first electrode plate 221 come(s) into contact with the corresponding multilayer separator structure. This can reduce the risk of burrs of the first electrode plate edge 2211a, exfoliated edge dressings, foreign matter introduced from the external environment, etc. puncturing the separator 223, so that the problem of short circuit of the battery 100 caused by the expansion of the electrode plate can be alleviated during use of the battery 100. The multilayer separator structure has a simple arrangement and has convenience in size control, thereby avoiding a too small overlapping range that affects the anti-puncture effect of the first multilayer separator structure 2231 and a too large overlapping range that affects the capacity of the electrode assembly 22, and thus effectively giving consideration to both the anti-puncture effect and the capacity of the electrode assembly 22. The puncturing of the separator 223 is alleviated by means of the multilayer separator structure, without introducing adhesive substances, and the operation has good repeatability, thereby facilitating secondary remediation.

According to some embodiments of the present application, optionally, according to the first aspect, a first example of the first aspect is provided. Referring to FIG. 10, the separator 223 comprises a first multilayer separator structure 2231 arranged between at least one of the two first electrode plate edges 2211a and the second electrode plate 222; the separator 223 comprises a first separator 2233 with a separator body arranged between the first electrode plate 221 and the second electrode plate 222, and a second separator 2234 with a separator body arranged on the side of the first electrode plate 221 away from the first separator 2233; the first separator 2233 and the second separator 2234 are arranged parallel to the first electrode plate 221; and the first separator 2233 comprises two first separator edges 2233a arranged opposite to each other in the first direction A. A first flanging structure 2233b is formed at at least one of the first separator edges 2233a, and the first flanging structure 2233b comprises at least two layers of first separators 2233; in terms of projection in the third direction C, the first electrode plate edge 2211a overlaps the first flanging structure 2233b; the first flanging structure 2233b wraps around the first electrode plate edge 2211a adjacent thereto; the second separator 2234 comprises two second separator edges 2234a arranged opposite to each other in the first direction A; a second flanging structure 2234b is formed at one of the second separator edges 2234a close to the first flanging structure 2233b, and the second flanging structure 2234b wraps around the first electrode plate edge 2211a adjacent thereto; and the separator body of the first separator 2233 and the second flanging structure 2234b form the first multilayer separator structure 2231.

The separator body of the separator 223 refers to a layer structure located in a middle area of the separator 223, and the separator edge is connected to an edge of the separator body. In the present application, in the third direction C, the separator body of the first separator 2233 and the separator body of the second separator 2234 may have the same thickness or different thicknesses.

The flanging structure refers to a layer structure area after the separator edge is folded relative to the separator body in the separator 223. The flanging structure is close to a cut edge of the separator 223. Illustratively, the flanging structure is parallel to the separator body.

In this design, the first separator 2233 and the second separator 2234 respectively wrap around the first electrode plate edge 2211a on two sides of the first electrode plate 221 by flanging. On the side of the first electrode plate 221 close to the second electrode plate 222, the second flanging structure 2234b and the separator body of the first separator 2233 form the first multilayer separator structure 2231. On the side of the first electrode plate 221 away from the second electrode plate 222, the first flanging structure 2233b and the separator body of the second separator 2234 also form a stacked distribution, so that anti-puncture protection structures are distributed on two sides of the first electrode plate edge 2211a. The multilayer separator structure is formed by a separator body and a flanging structure, which can be completed by performing a flanging operation at the edge of the separator 223 during preparation, so that the operation is simple. The flanging structure wrapping around the adjacent electrode plate edge can be implemented by folding the separator edge around the first electrode plate edge 2211a in the preparation process, making it easier to control the accuracy of a flanging width.

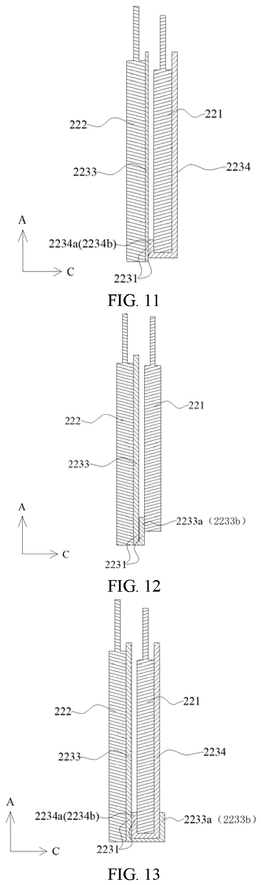

According to some embodiments of the present application, optionally, according to the first aspect, a second example of the first aspect is provided. Referring to FIG. 11, the separator 223 comprises a first multilayer separator structure 2231 arranged between at least one of the two first electrode plate edges 2211a and the second electrode plate 222; the separator 223 comprises a first separator 2233 arranged between the first electrode plate 221 and the second electrode plate 222, and a second separator 2234 with a separator body arranged on the side of the first electrode plate 221 away from the first separator 2233; the first separator 2233 and the second separator 2234 are arranged parallel to the first electrode plate 221; and the second separator 2234 comprises two second separator edges 2234a arranged opposite to each other in the first direction A. A second flanging structure 2234b is formed at at least one of the second separator edges 2234a, and the second flanging structure 2234b comprises at least two layers of second separators 2234; in terms of projection in the third direction C, the first electrode plate edge 2211a overlaps the second flanging structure 2234b and the first separator 2233; the second flanging structure 2234b wraps around the first electrode plate edge 2211a adjacent thereto; and the second flanging structure 2234b and a separator body of the first separator 2233 form the first multilayer separator structure 2231.

In this design, the second separator 2234 wraps around the first electrode plate edge 2211a on the side of the first electrode plate 221 away from the second electrode plate 222 by flanging. On the side of the first electrode plate 221 close to the second electrode plate 222, the second flanging structure 2234b and the separator body of the first separator 2233 form the first multilayer separator structure 2231, so that an anti-puncture protection structure is distributed on the side of the first electrode plate edge 2211a close to the second electrode plate 222. The multilayer separator structure is formed by a separator body and a flanging structure, which can be completed by performing a flanging operation at the edge of the separator 223 during preparation, so that the operation is simple. The flanging structure wrapping around the adjacent electrode plate edge can be implemented by folding the separator edge around the first electrode plate edge 2211a in the preparation process, making it easier to control the accuracy of a flanging width.

According to some embodiments of the present application, optionally, according to the first aspect, a third example of the first aspect is provided. Referring to FIG. 12, the separator 223 comprises a first multilayer separator structure 2231 arranged between at least one of the two first electrode plate edges 2211a and the second electrode plate 222; the separator 223 comprises a first separator 2233 arranged between the first electrode plate 221 and the second electrode plate 222; the first separator 2233 is arranged parallel to the first electrode plate 221; and the first separator 2233 comprises two first separator edges 2233a arranged opposite to each other in the first direction A. A first flanging structure 2233b is formed at at least one of the first separator edges 2233a, and the first flanging structure 2233b comprises at least two layers of first separators 2233; in terms of projection in the third direction C, the first electrode plate edge 2211a overlaps the first flanging structure 2233b; and the first flanging structure 2233b and a separator body of the first separator 2233 form the first multilayer separator structure 2231.

In this design, the first separator 2233 is flanged at the first separator edge 2233a, and on the side of the first electrode plate 221 close to the second electrode plate 222, the first flanging structure 2233b and the separator body of the first separator 2233 form the first multilayer separator structure 2231, so that an anti-puncture protection structure is distributed on the side of the first electrode plate edge 2211a close to the second electrode plate 222. The multilayer separator structure is formed by a separator body and a flanging structure, which can be completed by performing a flanging operation at the edge of the separator 223 during preparation, so that the operation is simple, and the fixing of the flanging structure is facilitated.

According to some embodiments of the present application, optionally, according to the first example of the first aspect, a fourth example of the first aspect is provided, in which in terms of projection in the third direction C, an overlapping area between the first flanging structure 2233b and the first electrode plate body 2211 and an overlapping area between the second flanging structure 2234b and the first electrode plate body 2211 at least partially overlap.

Referring to FIGS. 10 and 13, in FIG. 10, the overlapping area between the first flanging structure 2233b and the first electrode plate body 2211 and the overlapping area between the second flanging structure 2234b and the first electrode plate body 2211 partially overlap; and in FIG. 13, the overlapping area between the first flanging structure 2233b and the first electrode plate body 2211 and the overlapping area between the second flanging structure 2234b and the first electrode plate body 2211 completely overlap.

In this design, the overlapping area between the first flanging structure 2233b and the first electrode plate body 2211 and the overlapping area between the second flanging structure 2234b and the first electrode plate body can respectively provide an anti-puncture function on two sides of the first electrode plate 221. When the overlapping area between the first flanging structure and the first electrode plate body 2211 and the overlapping area between the second flanging structure and the first electrode plate body partially overlap, edges of the first flanging structure and the second flanging structure are distributed in a staggered manner in the first direction A, so that a total thickness of the first electrode plate 221 and the flanging structures on the two sides changes stepwise in the first direction A, and a pressure action of a terrace formed by the edges of the first flanging structure and the second flanging structure on the first electrode plate 221 can be weakened during expansion, squeezing, etc.

According to some embodiments of the present application, optionally, referring to FIG. 10, according to the first aspect and any one of the first to fourth examples of the first aspect, a fifth example of the first aspect is provided, in which in the first direction A, the first electrode plate 221 has a dimension of L1, and the first multilayer separator structure 2231 has a dimension of L2, where L2/L1 ≤ 1/10.

L1 is the length of the first electrode plate body 2211 in the first direction A, and L2 is the length of the first multilayer separator structure 2231 in the first direction A.

In this design, an overlap width between the first multilayer separator structure 2231 and the first electrode plate body 2211 is controlled within a certain standard in the first direction A, thereby effectively maintaining the capacity of the electrode assembly 22, and avoiding a too large overlapping range that affects the capacity of the electrode assembly 22.

According to some embodiments of the present application, optionally, according to the first aspect and any one of the first to fifth examples of the first aspect, a sixth example of the first aspect is provided, in which the electrode assembly 22 is of a wound structure.

In this design, especially when the first multilayer separator structure 2231 is provided, since the first electrode plate edge 2211a in the wound structure generally has a relatively large length, the first multilayer separator structure 2231 can effectively alleviate the problem of short circuit of the battery 100 caused by the separator 223 being punctured, and the arrangement of the first multilayer separator structure 2231 is further facilitated.

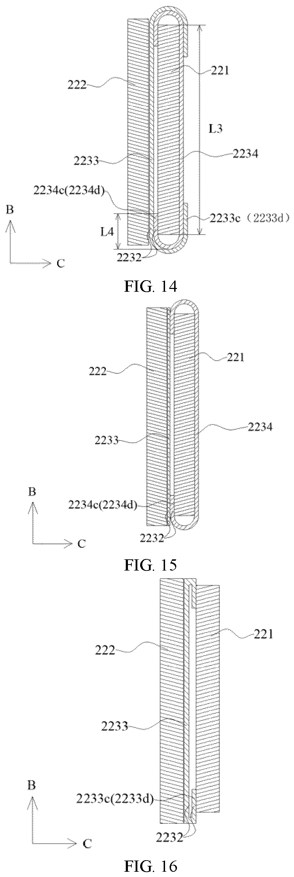

According to some embodiments of the present application, optionally, according to the first aspect, a seventh example of the first aspect is provided. Referring to FIG. 14, the separator 223 comprises two second multilayer separator structures 2232 arranged between the two second electrode plate edges 2211b and the second electrode plate 222; the separator 223 comprises a first separator 2233 with a separator body arranged between the first electrode plate 221 and the second electrode plate 222, and a second separator 2234 with a separator body arranged on the side of the first electrode plate 221 away from the first separator 2233; the first separator 2233 and the second separator 2234 are arranged parallel to the first electrode plate 221; and the first separator 2233 comprises two third separator edges 2233c arranged opposite to each other in the second direction B. Third flanging structures 2233d are formed at the two third separator edges 2233c, and each of the third flanging structures 2233d comprises at least two layers of first separators 2233; in terms of projection in the third direction C, the second electrode plate edge 2211b overlaps the third flanging structure 2233d; the third flanging structure 2233d wraps around the second electrode plate edge 2211b adjacent thereto; the second separator 2234 comprises two fourth separator edges 2234c arranged opposite to each other in the second direction B; a fourth flanging structure 2234d is formed at one of the fourth separator edges 2234c close to the third flanging structure 2233d, and the fourth flanging structure 2234d wraps around the second electrode plate edge 2211b adjacent thereto; and the separator body of the first separator 2233 and the fourth flanging structure 2234d form the second multilayer separator structure 2232.

In this design, the first separator 2233 and the second separator 2234 respectively wrap around the second electrode plate edge 2211b on two sides of the first electrode plate 221 by flanging. On the side of the first electrode plate 221 close to the second electrode plate 222, the fourth flanging structure 2234d and the separator body of the first separator 2233 form a second multilayer separator structure 2232. On the side of the first electrode plate 221 away from the second electrode plate 222, the third flanging structure 2233d and the separator body of the second separator 2234 also form a second multilayer separator structure 2232, so that anti-puncture protection structures are distributed on two sides of the second electrode plate edge 2211b. The multilayer separator structure is formed by a separator body and a flanging structure, which can be completed by performing a flanging operation at the edge of the separator 223 during preparation, so that the operation is simple. The flanging structure wrapping around the adjacent electrode plate edge can be implemented by folding the separator edge around the second electrode plate edge 2211b in the preparation process, making it easier to control the accuracy of a flanging width.

According to some embodiments of the present application, optionally, according to the first aspect, an eighth example of the first aspect is provided. Referring to FIG. 15, the separator 223 comprises two second multilayer separator structures 2232 arranged between the two second electrode plate edges 2211b and the second electrode plate 222; the separator 223 comprises a first separator 2233 arranged between the first electrode plate 221 and the second electrode plate 222, and a second separator 2234 with a separator body arranged on the side of the first electrode plate 221 away from the first separator 2233; the first separator 2233 and the second separator 2234 are arranged parallel to the first electrode plate 221; and the second separator 2234 comprises two fourth separator edges 2234c arranged opposite to each other in the second direction B. Fourth flanging structures 2234d are formed at the two fourth separator edges 2234c, and each of the fourth flanging structures 2234d comprises at least two layers of second separators 2234; in terms of projection in the third direction C, the second electrode plate edge 2211b overlaps the fourth flanging structure 2234d and the first separator 2233; the fourth flanging structure 2234d wraps around the second electrode plate edge 2211b adjacent thereto; and the fourth flanging structure 2234d and a separator body of the first separator 2233 form the second multilayer separator structure 2232.

In this design, the second separator 2234 wraps around the second electrode plate edge 221 1b on the side of the first electrode plate 221 away from the second electrode plate 222 by flanging. On the side of the first electrode plate 221 close to the second electrode plate 222, the fourth flanging structure 2234d and the separator body of the first separator 2233 form a second multilayer separator structure 2232, so that an anti-puncture protection structure is distributed on the side of the second electrode plate edge 2211b close to the second electrode plate 222. The multilayer separator structure is formed by a separator body and a flanging structure, which can be completed by performing a flanging operation at the edge of the separator 223 during preparation, so that the operation is simple. The flanging structure wrapping around the adjacent electrode plate edge can be implemented by folding the separator edge around the second electrode plate edge 2211b in the preparation process, making it easier to control the accuracy of a flanging width.

According to some embodiments of the present application, optionally, according to the first aspect, a ninth example of the first aspect is provided. Referring to FIG. 16, the separator 223 comprises two second multilayer separator structures 2232 arranged between the two second electrode plate edges 2211b and the second electrode plate 222; the separator 223 comprises a first separator 2233 arranged between the first electrode plate 221 and the second electrode plate 222; the first separator 2233 is arranged parallel to the first electrode plate 221; and the separator 223 comprises two third separator edges 2233c arranged opposite to each other in the second direction B. Third flanging structures 2233d are formed at the two third separator edges 2233c, and each of the third flanging structures 2233d comprises at least two layers of first separators 2233; in terms of projection in the third direction C, the second electrode plate edge 2211b overlaps the third flanging structure 2233d; and the third flanging structure 2233d and a separator body of the first separator 2233 form the second multilayer separator structure 2232.

In this design, the first separator 2233 is flanged at the third separator edge 2233c, and on the side of the first electrode plate 221 close to the second electrode plate 222, the third flanging structure 2233d and the separator body of the first separator 2233 form the second multilayer separator structure 2232, so that an anti-puncture protection structure is distributed on the side of the second electrode plate edge 2211b close to the second electrode plate 222. The multilayer separator structure is formed by a separator body and a flanging structure, which can be completed by performing a flanging operation at the edge of the separator 223 during preparation, so that the operation is simple, and the fixing of the flanging structure is facilitated.

According to some embodiments of the present application, optionally, according to the seventh example of the first aspect, a tenth example of the first aspect is provided, in which in terms of projection in the third direction C, an overlapping area between the third flanging structure 2233d and the first electrode plate body 2211 and an overlapping area between the fourth flanging structure 2234d and the first electrode plate body 2211 at least partially overlap.

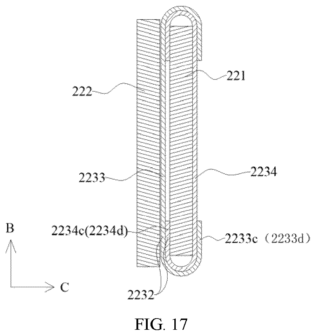

Referring to FIGS. 14 and 17, in FIG. 14, the overlapping area between the first flanging structure 2233b and the first electrode plate body 2211 and the overlapping area between the second flanging structure 2234b and the first electrode plate body 2211 partially overlap; and in FIG. 17, the overlapping area between the first flanging structure 2233b and the first electrode plate body 2211 and the overlapping area between the second flanging structure 2234b and the first electrode plate body 2211 completely overlap.

In this design, the overlapping area between the third flanging structure 2233d and the first electrode plate body 2211 and the overlapping area between the fourth flanging structure 2234d and the first electrode plate body can respectively provide an anti-puncture function on two sides of the first electrode plate 221. When the overlapping area between the third flanging structure and the first electrode plate body 2211 and the overlapping area between the fourth flanging structure and the first electrode plate body partially overlap, edges of the third flanging structure and the fourth flanging structure are distributed in a staggered manner in the second direction B, so that a total thickness of the first electrode plate 221 and the flanging structures on the two sides changes stepwise in the second direction B, and a pressure action of a terrace formed by the edges of the third flanging structure and the fourth flanging structure on the first electrode plate 221 can be weakened during expansion, squeezing, etc.

According to some embodiments of the present application, optionally, according to the first aspect and any one of the seventh to tenth examples of the first aspect, an eleventh example of the first aspect is provided. Referring to FIG. 14, in the second direction B, the first electrode plate 221 has a dimension of L3, and the second multilayer separator structure 2232 has a dimension of L4, where L4/L3 ≤ 1/10.

L3 is the length of the first electrode plate body 2211 in the second direction B, and L4 is the length of the second multilayer separator structure 2232 in the second direction B.

In this design, an overlap width between the second multilayer separator structure 2232 and the first electrode plate body 2211 is controlled within a certain standard in the second direction B, thereby effectively maintaining the capacity of the electrode assembly 22.

According to some embodiments of the present application, optionally, according to the first aspect and any one of the seventh to eleventh examples of the first aspect, a twelfth example of the first aspect is provided, in which the electrode assembly 22 is of a laminated structure.

In this design, especially when the second multilayer separator structure 2232 is provided, the second multilayer separator structure 2232 can effectively alleviate the problem of short circuit of the battery 100 caused by the separator 223 being punctured, and the arrangement of the second multilayer separator structure 2232 is further facilitated.

According to some embodiments of the present application, optionally, according to either of the second and eighth examples of the first aspect, a thirteenth example of the first aspect is provided. Referring to FIGS. 11 and 15, in the third direction C, the separator body of the first separator 2233 has a dimension less than that of the separator body of the second separator 2234.

In the third direction C, the dimension of the separator body of the first separator 2233 refers to the thickness of the separator body, and the dimension of the separator body of the second separator 2234 refers to the thickness of the separator body.

In this design, in the third direction C, the separator body of the first separator 2233 has a relatively small dimension, and between the first electrode plate 221 and the second electrode plate 222, the separator body of the first separator 2233 effectively alleviates the problem that the separator 223 is punctured by fitting with the flanging structure; and the separator body of the second separator 2234 has a relatively large dimension, and on the side of the first electrode plate 221 away from the second electrode plate 222, the separator body itself of the second separator 2234 can alleviate to some extent the problem of the separator 223 being punctured.

In a second aspect, the present application provides a battery cell 20. The battery cell 20 comprises a shell 21 and an electrode assembly 22 in the above embodiments. The electrode assembly 22 is received in the shell 21.

In a third aspect, the present application provides a battery 100. The battery 100 comprises a case 10 and a battery cell 20 in the above embodiment. The battery cell 20 is received in the case 10.

In a fourth aspect, the present application provides a power consuming apparatus, comprising a battery 100 in the above embodiment.

In a fifth aspect, the present application provides a method for preparing an electrode assembly 22, comprising: preparing a first electrode plate 221, a separator 223, and a second electrode plate 222. The first electrode plate 221 comprises a first electrode plate body 2211 and a first tab 2212; the first electrode plate body 2211 comprises two first electrode plate edges 2211a arranged opposite to each other in a first direction A and two second electrode plate edges 2211b arranged opposite to each other in a second direction B; the first direction A is perpendicular to the second direction B; and the first tab 2212 is located at one of the first electrode plate edges 2211a. The separator 223 is configured to comprise a first multilayer separator structure 2231 arranged between at least one of the two first electrode plate edges 2211a and the second electrode plate 222; and in terms of projection in a third direction C, the first electrode plate edge 2211a overlaps the first multilayer separator structure 2231; and/or the separator 223 is configured to comprise two second multilayer separator structures 2232 arranged between the two second electrode plate edges 2211b and the second electrode plate 222; in terms of projection in the third direction C, each of the second electrode plate edges 2211b overlaps one of the second multilayer separator structures 2232; and the third direction C is perpendicular to the first direction A and the second direction B.

In the technical solution of the embodiment of the present application, the electrode assembly 22 in the above embodiments can be prepared, so that the problem of short circuit of the battery 100 caused by expansion of an electrode plate can be alleviated during use of the battery 100.

According to some embodiments of the present application, optionally, according to the fifth aspect, a first example of the fifth aspect is provided, in which the step that the separator 223 is configured to comprise a first multilayer separator structure 2231 arranged between at least one of the two first electrode plate edges 2211a and the second electrode plate 222 comprises: flanging and folding at least one edge of the separator 223 close to the first electrode plate edge 2211a; and the step in which the separator 223 is configured to comprise two second multilayer separator structures 2232 arranged between the two second electrode plate edges 2211b and the second electrode plate 222 comprises: flanging and folding two edges of the separator 223 close to the second electrode plate edge 2211b.

When the electrode assembly 22 is in the flanging form as shown in FIGS. 10, 11, 13, 14, 15 and 17, optionally, a separator 223 is placed first, then a first electrode plate 221 is placed on the separator 223, and then the separator 223 extends beyond the edge of the first electrode plate 221, and is folded around the edge of the first electrode plate 221 to wrap around the edge of the first electrode plate 221.

When the electrode assembly 22 is in the flanging form as shown in FIGS. 10, 13, 14 and 17, optionally, after the above flanging operation is completed, a separator 223 is placed again, then the first electrode plate 221 enclosed by the separator 223 is turned over and then placed on the separator 223 placed for the second time, and then the separator placed for the second time extends beyond the edge of the first electrode plate 221 and is folded around the edge of the first electrode plate 221 to wrap around the edge of the first electrode plate 221.

When the electrode assembly 22 is in the flanging form as shown in FIGS. 12 and 16, optionally, a separator 223 is placed first, then an edge of the separator 223 is folded such that a folded part is parallel to a separator body of the separator 223, and then a first electrode plate 221 is placed on the separator 223.

In this design, a flanging structure is prepared by performing a flanging operation at the edge of the separator 223, and a multilayer separator structure is formed by fitting between the flanging structure and a separator body, so that the operation is simple.

According to some embodiments of the present application, optionally, according to the first example of the fifth aspect, a second example of the fifth aspect is provided, in which the flanging and folding operation is performed by means of a manipulator or by means of wind power.

When wind power is used for folding, the temperature of an airflow for providing wind power is not limited, and the airflow may be cold air or hot air. A wind direction of the airflow for providing wind power is not limited. Taking horizontal placement of the separator 223 as an example, optionally, the wind direction of the airflow changes during the flanging operation, and when the flanging starts, wind power is applied below the edge of the separator 223 to be folded. The wind direction is, for example, perpendicular to a surface of the separator body of the separator 223. As the folding process progresses, the wind gradually turns to be approximately parallel to the surface of the separator body of the separator 223. For example, an included angle between the wind and the surface ranges from -15° to +15°, where -15° means that the wind blows upward obliquely from the bottom, and +15° means that the wind blows downward obliquely from the top. If the angle between the wind that blows upward obliquely and the surface of the separator body is too large, the edge of the separator 223 cannot be well blown to be parallel to the separator body; and if the angle between the wind that blows upward obliquely and the surface of the separator body is too large, it is not conducive to ensuring the flatness of the flanging structure.

In this design, when the flanging and folding operation is performed by means of a manipulator, the operation is flexible and efficient; and when the flanging and folding operation is performed by means of wind power, a contactless operation can be implemented, thereby avoiding damage to the separator 223, the electrode plates, etc. caused by a contact operation, and avoiding the introduction of foreign matter caused by the contact operation.

According to some embodiments of the present application, optionally, according to either of the first and second examples of the fifth aspect, a third example of the fifth aspect is provided, in which the electrode assembly 22 is of a laminated structure, and the preparation method further comprises bonding an area subjected to the flanging and folding by hot pressing; or the electrode assembly 22 is of a wound structure, and the preparation method further comprises bonding an area subjected to the flanging and folding by means of a bonding material.

In the process of hot-pressing bonding, optionally, a hot pressing pressure ranges from 0 kpf to 20000 kpf, where the maximum pressure may be adjusted according to a JR design and apparatus capacity. A hot pressing temperature is 25°C-200°C, where the maximum temperature may be adjusted according to a chemical system of the electrode assembly 22. Taking a ternary material as an example, the ternary material begins to lose stability when its temperature exceeding 200°C. Hot pressing time > 0 s, where the maximum time is adjusted according to the heating capacity of the apparatus, a JR heat transfer rate, a temperature control effect of a hot pressing environment, etc., and generally does not exceed 300 s.

With regard to the way of bonding with the bonding material, the bonding material may be distributed on an inner side of the entire flanging structure; or the bonding material may be distributed on an inner side of the end of the flanging structure close to a cut edge of the separator 223, and the width of the distribution range of the bonding material is, for example, 5 mm to 10 mm. There is no limit to types of bonding materials. Each bonding material may have bonding properties at room temperature, or the bonding material may have bonding properties under heating and other conditions. Optionally, the bonding material is a hot melt adhesive, such as ethylene carbonate (EC), which is a common component in an electrolyte solution, and can be dissolved in the electrolyte solution after liquid injection, and the influence on the performance of the battery 100 can also be reduced. When the hot melt adhesive such as EC is used for bonding, because its melting point is about 36.4°C, the hot melt adhesive is solid at room temperature, and can be sprayed after being melted by a heating gun. The hot melt adhesive may also be combined with a folding way by means of wind power to help the flanging structure to be bonded and fixed in the flanging process by blowing hot air.

For the hot-pressing bonding of the laminated structure, one hot-pressing bonding treatment may be performed after a flanging structure of a separator is formed, especially when the flanging structure has a small wrapping width for the electrode plate. When the flanging structure has a large wrapping width for the electrode plate, it is also possible to perform the hot pressing treatment at a time after all layer structures of the electrode assembly 22 are stacked.

In other embodiments, for the laminated structure, it is also possible to bond the flanging and folding area by means of the bonding material; and for the wound structure, especially when the flanging structure has a large wrapping width for the electrode plate, it is also possible to perform bonding by hot pressing.

In this design, the flanging structure is bonded and fixed, facilitating subsequent operations such as lamination, winding and overlaying during production of the electrode assembly 22, and ensuring that the flanging structure can better fit with the separator body to provide an anti-puncture function. In the case of the laminated structure, hot pressing treatment is facilitated, and the hot pressing bonding is well matched with a process for producing the electrode assembly 22. In the case of the wound structure, the bonding material may be applied for bonding before or during winding, which is well matched with the process for producing the electrode assembly 22.

According to some embodiments of the present application, referring to FIGS. 4 to 6, the electrode assembly 22 is of a wound structure, and a first multilayer separator structure 2231 is provided between the first electrode plate edge 2211a provided with no first tab 2212 and the second electrode plate 222. In the first separator 2233, the first separator edge 2233a away from the first tab 2212 forms a first flanging structure 2233b wrapping around the first electrode plate edge 2211a. In the second separator 2234, the second separator edge 2234a away from the first tab 2212 forms a second flanging structure 2234b wrapping around the first electrode plate edge 2211a, and the separator body of the first separator 2233 and the second flanging structure 2234b form the first multilayer separator structure 2231. In therms of projection in the third direction C, the overlapping area between the first flanging structure 2233b and the first electrode plate body 2211 and the overlapping area between the second flanging structure 2234b and the first electrode plate body 2211 partially overlap.

During the preparation of the electrode assembly 22, the first separator 2233 and the second separator 2234 each are flanged, folded and fixed as follows: the separator 223 is first cut so that the first separator edge 2233a of the separator away from the first tab 2212 extends beyond the first electrode plate edge 2211a provided with no first tab 2212; an area of the separator 223 extending beyond the first electrode plate edge 2211a is coated with a layer of hot melt adhesive, and then flanging and folding are performed by wind blowing; and after the flanging and folding are completed, the wind temperature is increased to melt the hot melt adhesive to complete the bonding.

According to some embodiments of the present application, referring to FIGS. 7 to 9, the electrode assembly 22 is of a laminated structure, and second multilayer separator structures 2232 are provided between the two second electrode plate edges 2211b and the second electrode plate 222. In the second separator 2234, two third separator edges 2233c form third flanging structures 2233d wrapping around the second electrode plate edges 2211b; and in the second separator 2234, two fourth separator edges 2234c form fourth flanging structures 2234d wrapping around the second electrode plate edges 2211b, and the separator body of the first separator 2233 and the fourth flanging structures 2234d form the second multilayer separator structures 2232. In therms of projection in the third direction C, the overlapping area between the third flanging structure 2233d and the fourth electrode plate body and the overlapping area between the second flanging structure 2234b and the first electrode plate body 2211 partially overlap.

During the preparation of the electrode assembly 22, the first separator 2233 and the second separator 2234 each are flanged, folded and fixed as follows: a separator roll is unfolded and laid flat on a working table, the first electrode plate 221 is placed on the separator 223, and the separator 223 is cut, such that the separator 223 extends beyond the second electrode plate edge 2211b on two sides; areas of the separator 223 extending beyond the second electrode plate edge 2211b are flanged and folded by means of a manipulator; and after the flanging and folding are completed, hot-pressing bonding is performed on the flanging areas under hot pressing conditions of a temperature of 95°C and a pressure of 7000 N for a period of time of 70 s.

## Claims

1. An electrode assembly, comprising a first electrode plate, a separator, and a second electrode plate, **characterized in that**:
the first electrode plate comprises a first electrode plate body and a first tab;
the first electrode plate body comprises two first electrode plate edges arranged opposite to each other in a first direction, and two second electrode plate edges arranged opposite to each other in a second direction; the first direction is perpendicular to the second direction; and the first tab is located at one of the first electrode plate edges, wherein:
the separator comprises a first multilayer separator structure arranged between at least one of the two first electrode plate edges and the second electrode plate; and in terms of projection in a third direction, the first electrode plate edge overlaps the first multilayer separator structure;
and/or
the separator comprises two second multilayer separator structures arranged between the two second electrode plate edges and the second electrode plate; in terms of projection in the third direction, each of the second electrode plate edges overlaps one of the second multilayer separator structures; and
the third direction is perpendicular to the first direction and the second direction.

2. The electrode assembly according to claim 1, wherein the separator comprises the first multilayer separator structure arranged between at least one of the two first electrode plate edges and the second electrode plate;
the separator comprises a first separator with a separator body arranged between the first electrode plate and the second electrode plate, and a second separator with a separator body arranged on the side of the first electrode plate away from the first separator;
the first separator and the second separator are arranged parallel to the first electrode plate;
the first separator comprises two first separator edges arranged opposite to each other in the first direction;
wherein a first flanging structure is formed at at least one of the first separator edges, and the first flanging structure comprises at least two layers of first separators; in terms of projection in the third direction, the first electrode plate edge overlaps the first flanging structure; the first flanging structure wraps around the first electrode plate edge adjacent thereto;
the second separator comprises two second separator edges arranged opposite to each other in the first direction;
a second flanging structure is formed at one of the second separator edges close to the first flanging structure, and the second flanging structure wraps around the first electrode plate edge adjacent thereto; and
the separator body of the first separator and the second flanging structure form the first multilayer separator structure.

3. The electrode assembly according to claim 1, wherein the separator comprises the first multilayer separator structure arranged between at least one of the two first electrode plate edges and the second electrode plate;
the separator comprises a first separator arranged between the first electrode plate and the second electrode plate, and a second separator with a separator body arranged on the side of the first electrode plate away from the first separator;
the first separator and the second separator are arranged parallel to the first electrode plate;
the second separator comprises two second separator edges arranged opposite to each other in the first direction;
wherein a second flanging structure is formed at at least one of the second separator edges, and the second flanging structure comprises at least two layers of second separators; in terms of projection in the third direction, the first electrode plate edge overlaps the second flanging structure and the first separator; the second flanging structure wraps around the first electrode plate edge adjacent thereto; and
the second flanging structure and a separator body of the first separator form the first multilayer separator structure.

4. The electrode assembly according to claim 1, wherein the separator comprises the first multilayer separator structure arranged between at least one of the two first electrode plate edges and the second electrode plate;
the separator comprises a first separator arranged between the first electrode plate and the second electrode plate;
the first separator is arranged parallel to the first electrode plate; the first separator comprises two first separator edges arranged opposite to each other in the first direction;
wherein a first flanging structure is formed at at least one of the first separator edges, and the first flanging structure comprises at least two layers of first separators; in terms of projection in the third direction, the first electrode plate edge overlaps the first flanging structure; and the first flanging structure and a separator body of the first separator form the first multilayer separator structure.

5. The electrode assembly according to claim 2, wherein in terms of projection in the third direction, an overlapping area between the first flanging structure and the first electrode plate body and an overlapping area between the second flanging structure and the first electrode plate body at least partially overlap.

6. The electrode assembly according to any one of claims 1 to 5, wherein in the first direction, the first electrode plate has a dimension of L1, and the first multilayer separator structure has a dimension of L2, where L2/L1 ≤ 1/10.

7. The electrode assembly according to any one of claims 1 to 6, wherein the electrode assembly is of a wound structure.

8. The electrode assembly according to claim 1, wherein the separator comprises two second multilayer separator structures arranged between the two second electrode plate edges and the second electrode plate;
the separator comprises a first separator with a separator body arranged between the first electrode plate and the second electrode plate, and a second separator with a separator body arranged on the side of the first electrode plate away from the first separator;
the first separator and the second separator are arranged parallel to the first electrode plate;
the first separator comprises two third separator edges arranged opposite to each other in the second direction;
wherein third flanging structures are formed at the two third separator edges, and each of the third flanging structures comprises at least two layers of first separators; in terms of projection in the third direction, the second electrode plate edge overlaps the third flanging structure; the third flanging structure wraps around the second electrode plate edge adjacent thereto;
the second separator comprises two fourth separator edges arranged opposite to each other in the second direction;
a fourth flanging structure is formed at one of the fourth separator edges close to the third flanging structure, and the fourth flanging structure wraps around the second electrode plate edge adjacent thereto; and
the separator body of the first separator and the fourth flanging structure form the second multilayer separator structure.

9. The electrode assembly according to claim 1, wherein the separator comprises two second multilayer separator structures arranged between the two second electrode plate edges and the second electrode plate;
the separator comprises a first separator arranged between the first electrode plate and the second electrode plate, and a second separator with a separator body arranged on the side of the first electrode plate away from the first separator;
the first separator and the second separator are arranged parallel to the first electrode plate;
the second separator comprises two fourth separator edges arranged opposite to each other in the second direction;
wherein fourth flanging structures are formed at the two fourth separator edges, and each of the fourth flanging structures comprises at least two layers of second separators; in terms of projection in the third direction, the second electrode plate edge overlaps the fourth flanging structure and the first separator; the fourth flanging structure wraps around the second electrode plate edge adjacent thereto; and
the fourth flanging structure and a separator body of the first separator form the second multilayer separator structure.

10. The electrode assembly according to claim 1, wherein the separator comprises two second multilayer separator structures arranged between the two second electrode plate edges and the second electrode plate;
the separator comprises a first separator arranged between the first electrode plate and the second electrode plate;
the first separator is arranged parallel to the first electrode plate; the separator comprises two third separator edges arranged opposite to each other in the second direction;
wherein third flanging structures are formed at the two third separator edges, and each of the third flanging structures comprises at least two layers of first separators; in terms of projection in the third direction, the second electrode plate edge overlaps the third flanging structure; and the third flanging structure and a separator body of the first separator form the second multilayer separator structure.

11. The electrode assembly according to claim 8, wherein in terms of projection in the third direction, an overlapping area between the third flanging structure and the first electrode plate body and an overlapping area between the fourth flanging structure and the first electrode plate body at least partially overlap.

12. The electrode assembly according to any one of claims 1 and 8 to 11, wherein in the second direction, the first electrode plate has a dimension of L3, and the second multilayer separator structure has a dimension of L4, where L4/L3 ≤ 1/10.

13. The electrode assembly according to any one of claims 1 and 8 to 12, wherein the electrode assembly is of a laminated structure.

14. The electrode assembly according to claim 3 or 9, wherein in the third direction, the separator body of the first separator has a dimension less than that of the separator body of the second separator.

15. A battery cell, comprising a shell and an electrode assembly according to any one of claims 1 to 14, wherein the electrode assembly is received in the shell.

16. A battery, comprising a case and a battery cell according to claim 15, wherein the battery cell is received in the case.

17. A power consuming apparatus, comprising a battery according to claim 16.

18. A method for preparing an electrode assembly, the method comprising: preparing a first electrode plate, a separator, and a second electrode plate, **characterized in that**:
the first electrode plate comprises a first electrode plate body and a first tab; the first electrode plate body comprises two first electrode plate edges arranged opposite to each other in a first direction, and two second electrode plate edges arranged opposite to each other in a second direction; the first direction is perpendicular to the second direction; and the first tab is located at one of the first electrode plate edges,
wherein:
the separator is configured to comprise a first multilayer separator structure arranged between at least one of the two first electrode plate edges and the second electrode plate; and in terms of projection in a third direction, the first electrode plate edge overlaps the first multilayer separator structure;
and/or
the separator is configured to comprise two second multilayer separator structures arranged between the two second electrode plate edges and the second electrode plate; in terms of projection in the third direction, each of the second electrode plate edges overlaps one of the second multilayer separator structures; and
the third direction is perpendicular to the first direction and the second direction.

19. The preparation method according to claim 18, wherein the step in which the separator is configured to comprise a first multilayer separator structure arranged between at least one of the two first electrode plate edges and the second electrode plate comprises:
flanging and folding at least one edge of the separator close to the first electrode plate edge; and
the step in which the separator is configured to comprise two second multilayer separator structures arranged between the two second electrode plate edges and the second electrode plate comprises:
flanging and folding two edges of the separator close to the second electrode plate edge.

20. The preparation method according to claim 19, wherein the flanging and folding operation is performed by means of a manipulator or by means of wind power.

21. The preparation method according to claim 19 or 20, wherein the electrode assembly is of a laminated structure, and the preparation method further comprises bonding an area subjected to the flanging and folding by hot pressing;
or
the electrode assembly is of a wound structure, and the preparation method further comprises bonding an area subjected to the flanging and folding by means of a bonding material.
